Europäisches Patentamt

European Patent Office

Office européen des brevets

(11) Veröffentlichungsnummer: **0 320 702**
**A1**

## (12) EUROPÄISCHE PATENTANMELDUNG

(21) Anmeldenummer: 88120060.4

(22) Anmeldetag: 01.12.88

(51) Int. Cl.4: **C08J 7/04 , C09D 3/727 , B32B 27/30**

(30) Priorität: 12.12.87 DE 3742179

(43) Veröffentlichungstag der Anmeldung:
21.06.89 Patentblatt 89/25

(84) Benannte Vertragsstaaten:
**DE FR GB IT**

(71) Anmelder: **BAYER AG**

**D-5090 Leverkusen 1 Bayerwerk(DE)**

(72) Erfinder: **Frohberg, Ekkehard, Dr.**
**Offenbachstrasse 33**
**D-5000 Köln 71(DE)**
Erfinder: **Richter, Klaus**
**Auf der Kicken 11**
**D-5000 Köln 80(DE)**
Erfinder: **Schneider, Kurt, Dr.**
**Campendonkstrasse 12**
**D-4150 Krefeld(DE)**

(54) **Matte Flächengebilde.**

(57) Flächiger Formkörper aus ABS-Kunststoff mit matter Oberfläche, bestehend aus einem Grundkörper aus ABS-Kunststoff mit einer Oberflächenschicht aus ABS-Kunststoff, und ein Verfahren zu dessen Herstellung.

EP 0 320 702 A1

## Matte Flächengebilde

Für eine Reihe von Anwendungen müssen Formkörper aus ABS-Kunststoffen eine matte Oberfläche haben (z.B., um Blendfreiheit von Kraftfahrzeugteilen zu erzielen). Eine matte Oberfläche liegt vor, wenn Licht nicht reflektiert, sondern diffus gestreut wird. Dazu ist es notwendig, daß die Oberfläche Unebenheiten und Unregelmäßigkeiten in der Größenordnung der Lichtwellenlänge aufweist.

Für die Herstellung matter Formkörper aus ABS hat man besondere ABS-Formmassen entwickelt, die z.B. den Kautschuk in Form großer Partikel und/oder Zusätze wie Nitrilkautschuk und/oder hydrophobierte Kieselsäure enthalten. In all diesen Fällen ist aber mit der "Matt"-Einstellung eine Verschlechterung der mechanischen Eigenschaften verbunden.

Unter ABS wird im vorliegenden Zusammenhang das Produkt der Pfropfpolymerisation harzbildender Monomerer, insbesondere Styrol, Acrylnitril, Methylmethacrylat und Mischungen daraus, auf einen Kautschuk, insbesondere Polybutadien und Butadien-Styrol-Copolymerisate sowie Mischungen der Pfropfprodukte mit thermoplastischen Harzen wie Copolymerisaten von Styrol und Acrylnitril, Copolymerisaten von $\alpha$-Methylstyrol und Acrylnitril und Terpolymerisaten aus Styrol, $\alpha$-Methylstyrol und Acrylnitril verstanden. Es soll also hier unter der Bezeichnung nicht nur Acrylnitril-Butadien-Styrol-Copolymerisat im engsten Sinn verstanden werden, sondern auch Methylmethacrylat, $\alpha$-Methylstyrol und andere Kautschuke einbezogen sein.

Es wurde gefunden, daß man, um flächige Formteile, z.B. Platten, aus ABS-Formmassen mit matter Oberfläche zu erhalten, nicht von "matt" eingestellten ABS-Formmassen ausgehen muß. Man kann vielmehr normale handelsübliche ABS-Formmasen verwenden, wenn man eine Oberflächenschicht aus einem anderen ABS-Material durch Coextrusion oder Aufkaschieren einer vorher hergestellten Folie aufbringt. Das die Oberflächenschicht bildende Material ist bevorzugt ein "matt" eingestelltes ABS.

Gegenstand der Erfindung ist somit ein flächiges Formteil, z.B. eine Platte, aus ABS-Kunststoff mit glanzverminderter Oberfläche aus einem Grundkörper aus ABS mit einer Oberflächenschicht aus bevorzugt "matt" eingestelltem ABS.

Ein weiterer Gegenstand der Erfindung ist ein Verfahren zur Herstellung eines flächigen Formteils aus ABS mit matter Oberfläche, das dadurch gekennzeichnet ist, daß man auf ein Flächengebilde aus ABS-Kunststoff durch Aufkaschieren oder durch Coextrusion eine dünne, matte Oberflächenschicht aus ABS-Kunststoff aufbringt.

"Matt" eingestelltes ABS im Sinne der Erfindung ist ein - an sich bekannter - den Kautschuk in Form großer Partikel und/oder Zusätze wie Nitrilkautschuk und/oder hydrophobierte Kieselsäure enthaltender ABS-Kunststoff.

Die erfindungsgemäßen flächigen Formteile haben die guten mechanischen Eigenschaften der Grundschicht und zugleich eine matte Oberfläche. Da es nicht mehr erforderlich ist, den ganzen Körper aus "matt" eingestelltem ABS herzustellen, wirken sich die schlechteren mechanischen Eigenschaften des "matt"-eingestellten ABS-Materials im praktischen Gebrauch nicht aus. Die geringeren mechanischen Eigenschaften der Oberflächenschicht übertragen sich nicht auf den Verbund.

Erstaunlicherweise ist die Oberfläche der erfindungsgemäßen Zweischichten-Flächengebilde gleichmäßiger und weniger glänzend als die entsprechenden Körper nur aus dem die Oberflächenschicht bildenden Material.

Besonders überraschend ist, daß die Oberflächenschicht, die durch Aufkaschieren einer Folie aus einem "matt" eingestellten ABS-Kunststoff aufgebracht wird, erheblich matter ist als die durch Coextrusion aufgebrachte Oberflächenschicht aus dem gleichen "matt" eingestellten ABS-Kunststoff.

Die gleichmäßige Mattigkeit der Oberfläche der erfindungsgemäß hergestellten Formkörper bleibt auch bei etwaigen nachfolgenden Verarbeitungsprozessen wie thermische Verformung (Tiefziehen) erhalten, je nach Rezeptur-Einstellung und Folienstärke kann sie unter Umständen sogar noch verstärkt werden.

Die erfindungsgemäßen Formkörper mit reduziertem Oberflächenglanz werden in einfacher Weise durch Extrusion aus für die Extrusion geeigneten ABS-Kunststoffen hergestellt, indem man auf das extrudierte Flächengebilde - z.B. eine Platte - während des Herstellprozesses eine dünne Oberflächenschicht durch Coextrusion oder Aufkaschieren einer vorher hergestellten Folie aufbringt.

Geeignete Extruder sind z.B. Einwellen-Extruder mit Drei-Zonen-Schnecke und Zylinder-Entgasung mit Breitschlitzdüse als Werkzeug.

Die Aufbringung der Folie geschieht durch einfache Schmelze-Kaschierung, wobei man die Folie ins Glättwerk einlaufen läßt. Die Haftung beider Schichten ist ausgezeichnet, eine zusätzliche Verwendung von Primern ist nicht erforderlich.

Im Falle der Coextrusion wird der Verbund über das Adapter-Verfahren oder Mehrkanal-Breitschlitzdüse als Werkzeug erzeugt.

Die zur Herstellung der erfindungsgemäßen Formkörper geeignete Folie wird nach an sich bekannten Folien-Herstellungsverfahren produziert, z.B. durch Extrusion auf einer Chill-Roll-Anlage. Sie wird durch eine Breitschlitzdüse als Werkzeug in der gewünschten Breite (bis zu ca. 1500 mm) und Stärke (zwischen 40 und 500 μm) extrudiert.

Zur Herstellung der erfindungsgemäßen Formkörper können alle ABS-Kunststoffe verwendet werden.

Bevorzugt eingesetzte ABS-Kunststoffe sind Zweiphasenkunststoffe aus

1. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

2. mindestens einem Pfropfpolymerisat, welches hergestellt worden ist durch Pfropfpolymerisation eines oder mehrerer der unter 1. genannten Monomeren auf ein Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Die unter 1. und 2. genannten Polymerisate können nach bekannten Verfahren wie Emulsions-, Lösungs-, Masse-, Suspensions- oder Fällungspolymerisation oder durch Kombination solcher Verfahren hergestellt werden.

Für die Extrusion besonders geeignete ABS-Kunststoffe bestehen aus einem Styrol/Acrylnitril (SAN)-Copolymerisat (72 Gew.-% Styrol, 28 Gew.-% Acrylnitril) mit einem Molekulargewicht $\overline{M}_w$ (Gewichtsmittel) von ca. 120 000 mit einer molekularen Uneinheitlichkeit $\frac{\overline{M}_n}{\overline{M}_w}$ -1 ≦ 2 des Matrixharz ( $\overline{M}_n$ = Zahlenmittel des Molekulargewichts, $\overline{M}_w$ = Ge-wichtsmittel des Molekulargewichts) und einem Pfropfkautschuk, bestehend aus 50 Gew.-Teilen Polybutadien mit einem mittleren Teilchendurchmesser ($d_{50}$) von 0,1 bis 0,4 μm, auf das 36 Gew.-Teile Styrol und 14 Gew.-Teile Acrylnitril aufgepfropft wurden. Das Mischungsverhältnis von Styrol-Acrylnitril-Copolymerisat und Pfropfkautschuk ist bevorzugt 40 bis 80:60 bis 20 (bezogen auf Gewicht), insbesondere 60:40.

Die im Sinne der Erfindung verwendeten "matt"-eingestellten ABS-Kunststoffe unterscheiden sich von den "Standard"-ABS-Kunststoffen dadurch, daß sie den Kautschuk in Form besonders großer Partikel und/oder Zusätze wie Nitrilkautschuk und/oder hydrophobierte Kieselsäure enthalten.

Beispiele

Bei den verwendeten ABS-Kunststoffen handelt es sich um ein "Standard"-ABS (A) und zwei "matt" eingestellte ABS-Kunststoffe (B) und (C).

Als Maß für die erzielte Mattigkeit wird der Glanzgrad angegeben. Er wird bestimmt nach DIN 67 530 mit einem Glanz-Meßgerät der Fa. Mallinckrodt unter einem Meßwinkel von 20°, gegebenenfalls von 85° (sofern sich unter einem Meßwinkel von 20° ein Wert < 30 ergibt).

Als für das Verhalten im praktischen Gebrauch aussagekräftige Prüfung wurde der Durchstoßversuch nach DIN 53 443 bei Raumtemperatur und bei -40° C durchgeführt. Angegeben wird die Schädigungsarbeit WS (J).

Verarbeitung:

Zur Herstellung homogener Formmassen werden die einzelnen Komponenten jeder Rezeptur unter Hinzufügen von Gleitmitteln, Additiven etc. gemischt und compoundiert (Innenkneter), anschließend wird granuliert.

Die erfindungsgemäßen Formkörper werden aus den Formmassen durch Extrusion - wie oben beschrieben -erhalten.

Prüfergebnisse:

1. Glanzgrad (Meßwinkel von 85°)

| Oberfläche | (B) | (C) |
|---|---|---|
| Kompaktplatte | 69 | 56 |
| Coexplatte (Grundschicht (A)) | 34 | 25 |
| Kaschierfolie/Platte (Grundschicht (A)) | 17 | 11 |

Der Glanzgrad von Standard-ABS (Rez. A) ist unter vergleichbaren Meßbedingungen nicht bestimmbar. Er beträgt unter einem Meßwinkel von 20° 89 (Kompaktplatte) bzw. 86 (Coexplatte mit Rez. A in Deck- und Grundschicht).


2. Durchstoßversuch:

Bei unserem Verbundsystem wurden für die Schädigungsarbeit folgende Werte ermittelt: (Schädigungsarbeit in J. jeweils Zugzone/Druckzone)

| | Raumtemp. | -40° |
|---|---|---|
| Decksch. (C)/Grundsch. (A) | 35/48 | 1/6 |
| zum Vergleich: | | |
| Decksch. (A)/Grundsch. (A) | 22/34 | 2/5 |

Bei unseren erfindungsgemäßen Formkörpern tritt somit auch bei Verwendung eines matt eingestellten ABS-Kunststoffes in der Deckschicht unter Praxisbedingungen eine Verschlechterung der mechanischen Eigenschaften nicht ein.


**Ansprüche**

1. Flächiger Formkörper aus ABS-Kunststoff mit matter Oberfläche, bestehend aus einem Grundkörper aus ABS-Kunststoff mit einer Oberflächenschicht aus ABS-Kunststoff.

2. Flächiger Formkörper aus ABS-Kunststoff mit matter Oberfläche, bestehend aus einem Grundkörper aus ABS-Kunststoff mit einer Oberflächenschicht aus matt eingestelltem ABS-Kunststoff.

3. Verfahren zur Herstellung eines Formkörpers nach Anspruch 1 und 2, dadurch gekennzeichnet, daß man auf den Grundkörper eine dünne Schicht aus dem gleichen oder einem "matt" eingestellten ABS durch Extrusion oder Aufkaschieren aufbringt.

4. Verwendung der Formkörper gemäß Anspruch 1 und 2 für Anwendungen, bei denen aus Sicherheits- oder anderen Gründen extrem hohe Anforderungen an die Mattigkeit der Oberfläche eine ABS-Kunststoffes gestellt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 507 538 (DENKI KAGAKU KOGYO K.K.) <br> * Ansprüche 1,7-11; Beispiel 7 * <br> --- | 1-4 | C 08 J 7/04 <br> C 09 D 3/727 <br> B 32 B 27/30 |
| A | US-A-4 247 580 (A.P. CHAO) <br> * Ansprüche * <br> --- | 1 | |
| A | CHEMICAL ABSTRACTS, Band 95, Nr. 8, 24. August 1981, Seite 87; Nr. 63862q, Columbus, Ohio, US; & JP-A-81 22 329 (NIPPON GAKKI CO., Ltd) 02-03-1981 <br> ----- | 1 | |
| | | | RECHERCHIERTE SACHGEBIETE (Int. Cl.4) <br><br> C 08 J <br> C 09 D <br> B 32 B |

Der vorliegende Recherchenbericht wurde für alle Patentansprüche erstellt

| Recherchenort | Abschlußdatum der Recherche | Prüfer |
|---|---|---|
| DEN HAAG | 23-03-1989 | HALLEMEESCH A.D. |